# EUROPEAN PATENT SPECIFICATION

(11) **EP 2 837 515 B1**
(45) Date of publication and mention of the grant of the patent: **14.09.2016**
(21) Application number: 14178755.6
(22) Date of filing: 28.07.2014
(51) Int. Cl.: B60K 11/04, B60K 11/08, B60H 1/00, F01P 3/18, F01P 7/10

(54) **Vehicle cooling system**
Fahrzeugkühlsystem
Système de refroidissement de véhicule

(30) Priority: 15.08.2013 US 201313967989
(43) Date of publication of application: 18.02.2015
(73) Proprietor: Deere & Company, Moline, IL 61265 (US)
(72) Inventor: Kappelman, Joshua J, Cedar Falls, IA Iowa 50613 (US); Shuttleworth, Adam J, Jesup, IA Iowa 50648 (US)
(74) Representative: Dehnhardt, Florian Christopher

(56) References cited:
- EP-A1- 1 741 894
- WO-A1-2011/075009
- DE-A1-102006 062 116
- JP-A- H10 280 959

## Description

The present invention relates to a vehicle cooling system.

It is known to provide work vehicles, such as agricultural tractors, with a vehicle cooling system wherein a plurality of coolers or heat exchangers are positioned on different sides of a volume adjacent to a cooling fan. In such a multi-faced cooling system, it is difficult to properly balance the air flow through all the heat exchangers. Some of the heat exchangers may have too much air flow, while others in the system may have too little air flow. Any excess air flow through a heat exchanger results in wasted power consumed by the cooling fan that could otherwise be used for productive work of the work vehicle. In addition, different vehicle operations may benefit from varying the air flows in such a vehicle cooling system.

A cooling system with three heat exchangers having the features of the preamble of claim 1 is known from EP 1 741 894 A1.

Therefore, what is needed in the art is a vehicle cooling system with improved air flow.

This and other objects are achieved by the present invention, wherein a vehicle cooling system is provided. The vehicle cooling system comprises a first heat exchanger having a first end and a second end positioned opposite from the first end. A cooling fan is spaced apart from the first heat exchanger. A second heat exchanger extends between the cooling fan and the first end of the first heat exchanger. A third heat exchanger is spaced apart from the second heat exchanger and extends between the cooling fan and the second end of the first heat exchanger. A baffle plate is pivotally mounted to the vehicle cooling system, the baffle plate has a pivot axis positioned adjacent to the first end of the first heat exchanger, the baffle plate being pivotal to a first position reducing air flow through the first heat exchanger and to a second position reducing air flow through the second heat exchanger. An actuator is provided for pivoting the baffle plate about the pivot axis.

As a result, the baffle plate can minimize fan power through the vehicle cooling system by directing air flow to the heat exchangers that need it. The baffle plate is movable so that it can be used to strategically direct air flow. Because the baffle plate sits between the two air flow streams coming from the first and second heat exchangers, the losses that would occur by simply closing off portions of a heat exchanger are minimized. Also, because the entire heat exchanger is still getting some air flow, the heat load is still more balanced than if air flow was shut-off to a portion of the heat exchanger. If air flow is shut-off to a portion of the heat exchanger, the heat exchanger ends up with a large thermal gradient across the heat exchanger, which generally decreases its life.

For a complete understanding of the objects, techniques, and structure of the invention reference should be made to the following detailed description and accompanying drawings, wherein similar components are designated by identical reference numerals:
- Fig. 1: is a perspective view of a vehicle cooling system with a pivoting baffle assembly, embodying the invention,
- Fig. 2: is a perspective view of a detail of the vehicle cooling system of Fig. 1, and
- Fig. 3: is a different perspective view of the detail of Fig. 2.

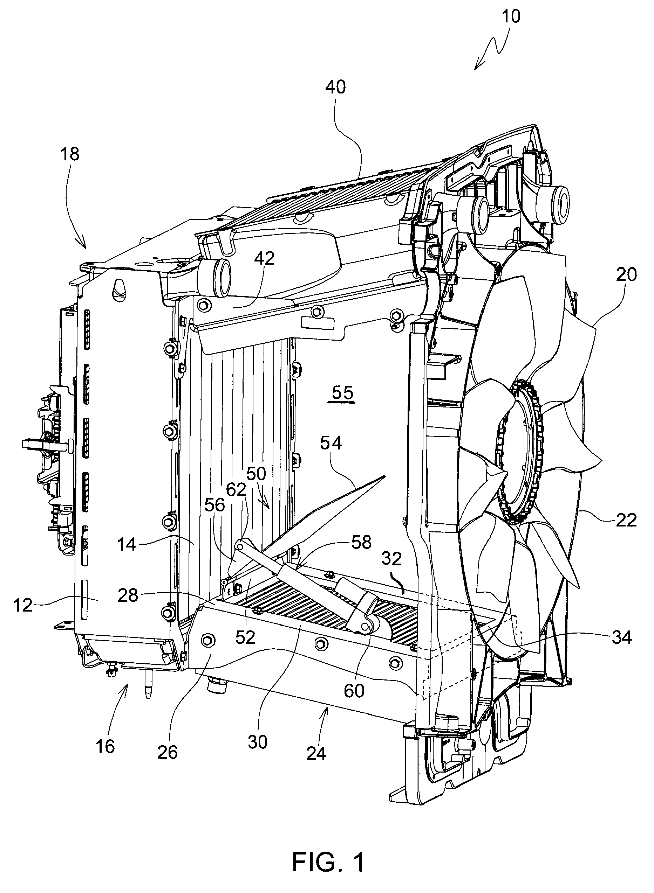

Referring to Fig. 1, a vehicle cooling system 10 is provided for a work vehicle (not shown). The vehicle cooling system 10 includes a first frame 12 which supports a front or first heat exchanger 14, such as a vehicle radiator. Both the first frame 12 and the first heat exchanger 14 have a lower or first end 16 and an upper or second end 18 which are positioned opposite from each other.

A cooling fan 20 is spaced apart from the first heat exchanger 14, and is surrounded by a fan frame 22. A second heat exchanger 24 extends between the cooling fan 20 and the first end 16 of the first heat exchanger 14. The second heat exchanger 24 is supported by a second frame 26. Second frame 26 includes a front member 28, a left side member 30, a right side member 32 and a rear member 34.

Upper or third heat exchanger 40 is spaced apart from the second heat exchanger 24 and extends between the cooling fan 20 and the second end 18 of the first heat exchanger 14. The third heat exchanger 40 is supported by a third frame 42 which extends between the second end 18 of the first frame 12 and an upper end of the fan frame 22.

A pivoting baffle assembly 50 includes a base plate 52 which is fixed to a central portion of front member 28 of second frame 26. A baffle plate 54 has an inner end pivotally coupled to an upper end of the base plate 52. An actuator arm 56 projects from the inner end of baffle plate 54 and is at an angle with respect to baffle plate 54. The baffle plate 54 has a pivot axis positioned adjacent to the first end 16 of the first heat exchanger 14. The baffle plate 54 extends into a space 55 which is enclosed by the vehicle cooling system 10.

An actuator comprising a linear actuator 58 has a first end or cylinder housing 60 pivotally coupled to the left side member 30 of second frame 26, and a second end or rod 62 pivotally coupled to the actuator arm 56. The linear actuator 58 is preferable a hydraulic cylinder.

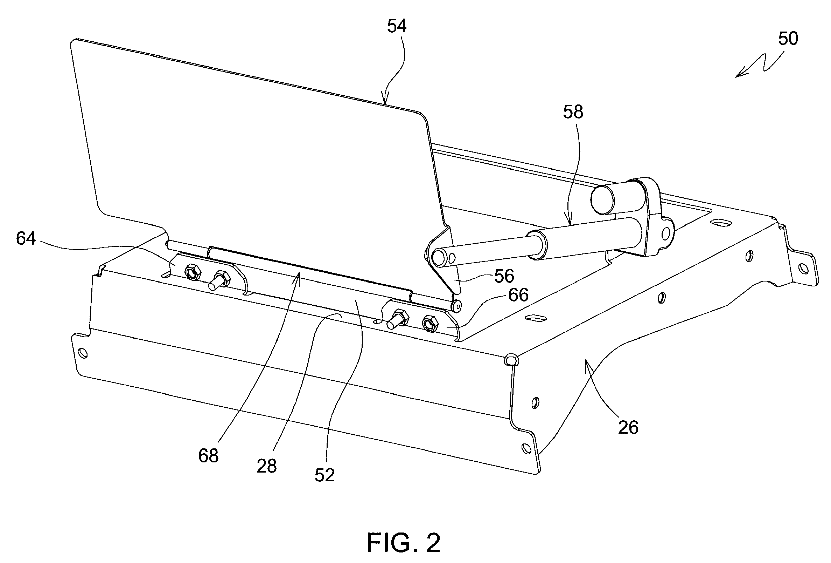

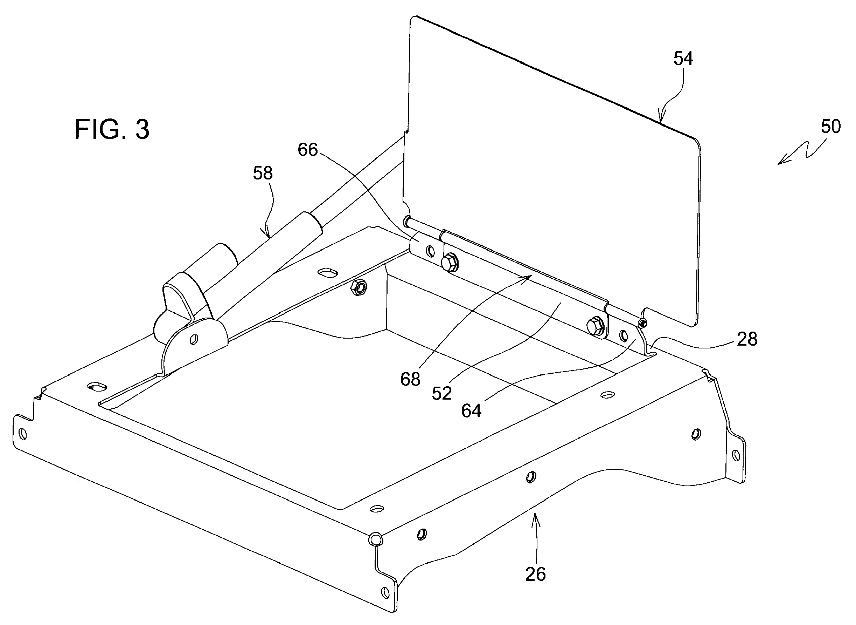

Referring now to Figs. 2 and 3, flanges 64 and 66 project upwardly from an upper portion of front member 28 of second frame 26. The base plate 52 is attached to the flanges 64 and 66. The base plate 52 is pivotally coupled to baffle plate 54 by a hinge 68. The actuator arm 56 projects rearwardly from one side of the baffle plate 54.

When the linear actuator 58 is fully extended in a first position, the baffle plate 54 will be adjacent to the first heat exchanger 14 and will reduce the amount of air flow through the first heat exchanger 14. When the linear actuator 58 is fully retracted in a second position, the baffle plate 54 will be adjacent to the second heat exchanger 24 and will reduce the amount of air flow through the second heat exchanger 24. The movable baffle plate 54 can be electronically controlled by means of the linear actuator 58 using sensors (not shown) to determine which of the heat exchangers 14, 24 and 40 need more air flow than others.

## Claims

1. A vehicle cooling system, the vehicle cooling system (10) comprising a first heat exchanger (14) having a first end (16) and a second end (18) positioned opposite from the first end (16); a cooling fan (20) spaced apart from the first heat exchanger (14); a second heat exchanger (24) extending between the cooling fan (20) and the first end (16) of the first heat exchanger (14); and a third heat exchanger (40) spaced apart from the second heat exchanger (24) and extending between the cooling fan (20) and the second end (18) of the first heat exchanger (14), **characterized by** a baffle plate (54) pivotally mounted to the vehicle cooling system (10), the baffle plate (54) having a pivot axis positioned adjacent to the first end (16) of the first heat exchanger (14), the baffle plate (54) being pivotal to a first position reducing air flow through the first heat exchanger (14) and to a second position reducing air flow through the second heat exchanger (24); and an actuator (58) for pivoting the baffle plate (54) about the pivot axis, wherein the baffle plate (54) sits between the two air flow streams coming from the first and second heat exchangers (14, 24).

2. The vehicle cooling system according to claim 1, **characterized in that** the baffle plate (54) extending into a space (55) which is enclosed by the vehicle cooling system (10).

3. The vehicle cooling system according to claim 1 or 2, **characterized in that** the actuator comprises a linear actuator (58).

4. The vehicle cooling system according to claims 1 to 3, **characterized in that** the actuator (58) comprises a hydraulic cylinder having a cylinder housing (60) pivotally coupled to a second frame (26) of the second heat exchanger (24), and having a rod (62) pivotally coupled to the baffle plate (54).

5. The vehicle cooling system according to claims 1 to 4, **characterized in that** an actuator arm (56) projects from an inner end of the baffle plate (54), the actuator (58) being coupled to the actuator arm (56).

6. The vehicle cooling system according to claim 5, **characterized in that** the actuator arm (56) projects at an angle with respect to the baffle plate (54).

## Patentansprüche

1. Fahrzeugkühlsystem, wobei das Fahrzeugkühlsystem (10) einen ersten Wärmetauscher (14) mit einem ersten Ende (16) und einem dem ersten Ende (16) gegenüberliegend positionierten zweiten Ende (18); ein Kühlgebläse (20), das vom ersten Wärmetauscher (14) beabstandet ist; einen zweiten Wärmetauscher (24), der sich zwischen dem Kühlgebläse (20) und dem ersten Ende (16) des ersten Wärmetauschers (14) erstreckt; und einen dritten Wärmetauscher (40), der vom zweiten Wärmetauscher (24) beabstandet ist und sich zwischen dem Kühlgebläse (20) und dem zweiten Ende (18) des ersten Wärmetauschers (14) erstreckt, umfasst, **gekennzeichnet durch** ein Staublech (54), das schwenkbar am Fahrzeugkühlsystem (10) montiert ist, wobei das Staublech (54) eine Schwenkachse aufweist, die angrenzend an das erste Ende (16) des ersten Wärmetauschers (14) positioniert ist und das Staublech (54) in eine erste Position, in der die Luftströmung durch den ersten Wärmetauscher (14) reduziert wird, und in eine zweite Position, in der die Luftströmung **durch** den zweiten Wärmetauscher (24) reduziert wird, schwenkbar ist; und ein Stellelement (58) zum Schwenken des Staubleches (54) um die Schwenkachse, wobei das Staublech (54) zwischen den zwei Luftströmungen vom ersten und zweiten Wärmetauscher (14, 24) positioniert ist.

2. Fahrzeugkühlsystem nach dem Anspruch 1, **dadurch gekennzeichnet, dass** das Staublech (54) sich in einen Raum (55) erstreckt, der vom Fahrzeugkühlsystem (10) umschlossen ist.

3. Fahrzeugkühlsystem nach Anspruch 1 oder 2, **dadurch gekennzeichnet, dass** das Stellelement einen Linear-Stellantrieb (58) umfasst.

4. Fahrzeugkühlsystem nach den Ansprüchen 1 bis 3, **dadurch gekennzeichnet, dass** das Stellelement (58) einen Hydraulikzylinder umfasst, der ein Zylindergehäuse (60), das schwenkbar mit einem zweiten Rahmen (26) des zweiten Wärmetauschers (24) gekoppelt ist, und ein Gestänge (62), das schwenkbar mit dem Staublech (54) gekoppelt ist, aufweist.

5. Fahrzeugkühlsystem nach den Ansprüchen 1 bis 4, **dadurch gekennzeichnet, dass** ein Stellelementarm (56) aus einem inneren Ende des Staubleches (54) hervortritt, wobei das Stellelement (58) mit dem Stellelementarm (56) gekoppelt ist.

6. Fahrzeugkühlsystem nach Anspruch 5, **dadurch gekennzeichnet, dass** der Stellelementarm (56) bezogen auf das Staublech (54) in einem Winkel hervortritt.

## Revendications

1. Système de refroidissement de véhicule, le système de refroidissement de véhicule (10) comprenant un premier échangeur thermique (14) comportant une première extrémité (16) et une seconde extrémité (18) positionnée à l'opposé de la première extrémité (16) ; un ventilateur de refroidissement (20) espacé du premier échangeur thermique (14) ; un deuxième échangeur thermique (24) s'étendant entre le ventilateur de refroidissement (20) et la première extrémité (16) du premier échangeur thermique (14) ; et un troisième échangeur thermique (40) espacé du deuxième échangeur thermique (24) et s'étendant entre le ventilateur de refroidissement (20) et la seconde extrémité (18) du premier échangeur thermique (14), **caractérisé par** une chicane (54) montée à pivotement sur le système de refroidissement de véhicule (10), la chicane (54) comportant un axe de pivotement en position adjacente à la première extrémité (16) du premier échangeur thermique (14), la chicane (54) pouvant pivoter jusqu'à une première position réduisant l'écoulement d'air à travers le premier échangeur thermique (14) et jusqu'à une seconde position réduisant l'écoulement d'air à travers le deuxième échangeur thermique (24) ; et un dispositif d'actionnement (58) servant à faire pivoter la chicane (54) autour de l'axe de pivotement, la chicane (54) étant disposée entre les deux flux d'air provenant des premier et deuxième échangeurs thermiques (14, 24).

2. Système de refroidissement de véhicule selon la revendication 1, **caractérisé en ce que** la chicane (54) s'étend dans un espace (55) qui est entouré par le système de refroidissement de véhicule (10).

3. Système de refroidissement de véhicule selon la revendication 1 ou 2, **caractérisé en ce que** le dispositif d'actionnement comprend un dispositif d'actionnement linéaire (58).

4. Système de refroidissement de véhicule selon les revendications 1 à 3, **caractérisé en ce que** le dispositif d'actionnement (58) comprend un vérin hydraulique comportant un logement de vérin (60) accouplé à pivotement à une seconde structure (26) du deuxième échangeur thermique (24), et comportant une tige (62) accouplée à pivotement à la chicane (54).

5. Système de refroidissement de véhicule selon les revendications 1 à 4, **caractérisé en ce qu'**un bras d'actionnement (56) fait saillie à partir d'une extrémité intérieure de la chicane (54), le dispositif d'actionnement (58) étant accouplé au bras d'actionnement (56).

6. Système de refroidissement de véhicule selon la revendication 5, **caractérisé en ce que** le bras d'actionnement (56) fait saillie à un angle par rapport à la chicane (54).
